# EUROPÄISCHE PATENTSCHRIFT

(11) **EP 1 770 455 B1**
(45) Veröffentlichungstag und Bekanntmachung des Hinweises auf die Patenterteilung: **10.03.2010**
(21) Anmeldenummer: 06119690.3
(22) Anmeldetag: 29.08.2006
(51) Int. Cl.: G05B 19/042

(54) **Steuereinrichtung und Datenträger für eine Steuereinrichtung**
Control device and data carrier for a control device
Dispositif de commande et support de données pour un dispositif de commande

(30) Priorität: 30.09.2005 DE 102005047140
(43) Veröffentlichungstag der Anmeldung: 04.04.2007
(73) Patentinhaber: SIEMENS AKTIENGESELLSCHAFT, 80333 München (DE)
(72) Erfinder: Schlereth, Michael, 91452, Wilhermsdorf (DE)

(56) Entgegenhaltungen:
- EP-A- 0 283 382
- EP-A- 0 993 900
- DE-A1- 19 543 826
- DE-A1- 19 732 669

## Beschreibung

Die vorliegende Erfindung betrifft eine Steuereinrichtung mit einer Anzahl von Kommunikationsanschlüssen, über die jeweils eine Anzahl von externen Peripherieeinheiten lösbar an die Steuereinrichtung anbindbar ist. Sie betrifft ferner einen Datenträger mit einem auf dem Datenträger gespeicherten Computerprogramm für eine solche Steuereinrichtung.

Steuereinrichtungen sind allgemein bekannt. Beispiele von Steuereinrichtungen sind speicherprogrammierbare Steuerungen oder numerische Steuerungen.

Die bekannten Steuereinrichtungen sind derart ausgebildet, dass sie im Betrieb einen Steuerungsprozess implementieren, der iterativ eine Folge von Steueranweisungen abarbeitet. Die Steueranweisungen stellen dabei eine Steuerungsvorschrift für einen industriellen technischen Prozess dar, der außerhalb der Steuereinrichtung abläuft. Im Stand der Technik greift der Steuerungsprozess bei jeder Iteration auf Eingangsdaten zu, die dem Steuerungsprozess zur Verfügung gestellt werden. Anhand der Eingangsdaten und innerhalb des Steuerungsprozesses gespeicherter interner Daten ermittelt der Steuerungsprozess Ausgangsdaten und aktualisiert die internen Daten. Die Ausgangsdaten stellt der Steuerungsprozess zur Verfügung. Die Eingangsdaten werden dem Steuerungsprozess dabei im Stand der Technik über die Kommunikationsanschlüsse zur Verfügung gestellt. Die Ausgangsdaten stellt der Steuerungsprozess zur Ausgabe über die Kommunikationsanschlüsse zur Verfügung.

Im Normalbetrieb der Steuereinrichtung sind die Peripherieeinheiten an die Kommunikationsanschlüsse angebunden und ihrerseits wiederum über Aktoren und Sensoren mit dem industriellen technischen Prozess verbunden. Die Eingangsdaten werden von den Peripherieeinheiten über die Sensoren vom industriellen technischen Prozess eingelesen, gegebenenfalls vorverarbeitet und über die Kommunikationsanschlüsse dem Steuerungsprozess zur Verfügung gestellt. Die Ausgangsdaten werden von den Peripherieeinheiten entgegen genommen und über die Aktoren an den industriellen technischen Prozess ausgegeben.

In dem obenstehend beschriebenen Normalbetrieb steuert also die Steuereinrichtung den industriellen technischen Prozess, und zwar in der Realität. In einer Vielzahl von Fällen ist es aber wünschenswert, vor der realen Steuerung des industriellen technischen Prozesses durch die Steuereinrichtung vorab zu testen, ob der industrielle technische Prozess wunschgemäß gesteuert würde. Es ist also erforderlich bzw. wünschenswert, eine Simulation vorzunehmen.

Im Stand der Technik ist es bereits bekannt, zu diesem Zweck in einem Rechner - beispielsweise einem PC - ein vollständiges Modell des industriellen technischen Prozesses, der Steuereinrichtung und der Peripherieeinheiten zu implementieren. Im Rechner erfolgt dann eine Komplettsimulation. Auf Grund des Umstands, dass eine Komplettsimulation erfolgt, also keine tatsächlichen Steuerungseingriffe in einen realen industriellen technischen Prozess erfolgen und keine Istwerte von einem realen industriellen technischen Prozess als Eingangsdaten herangezogen werden, ist keinerlei Echtzeitfähigkeit erforderlich. Die Simulation des Echtzeitverhaltens ist daher nur eingeschränkt möglich. Weiterhin erfordert die Erstellung des Modells des industriellen technischen Prozesses einen erheblichen Zeitaufwand. Schließlich ist auch noch eine Emulationssoftware oder dergleichen erforderlich, damit der Rechner in der Lage ist, die Folge von Steueranweisungen abzuarbeiten und das Verhalten der Steuereinrichtung korrekt zu simulieren. Es wäre daher wünschenswert, bereits während der Simulation die Steuereinrichtung selbst verwenden zu können.

Es ist selbstverständlich denkbar, in einem Rechner ausschließlich ein Modell des industriellen technischen Prozesses zu implementieren und nur den industriellen technischen Prozess mittels des Rechners in Echtzeit zu simulieren. In diesem Fall könnten die Steuereinrichtung und die Peripherieeinheiten unverändert verwendet werden, falls die Peripherieeinheiten mit dem Rechner auf geeignete Weise verbunden werden können. Diese prinzipiell denkbare Vorgehensweise stößt aber bei der praktischen Umsetzung meist auf erhebliche Schwierigkeiten und wird daher nicht ergriffen. Ferner ist auch in diesem Fall eine komplette Simulation des industriellen technischen Prozesses erforderlich. Von Vorteil wäre bei dieser Vorgehensweise aber, dass die Folge von Steueranweisungen in der Steuereinrichtung selbst abgearbeitet wird.

Im Stand der Technik ist es auch bekannt, einzelne Peripherieeinheiten und den mit der jeweiligen Peripherieeinheit korrespondierenden Teil des industriellen technischen Prozesses zu simulieren. Hierzu wird in einem Rechner ein Modell der zu simulierenden Peripherieeinheit und des korrespondierenden Teils des industriellen technischen Prozesses implementiert. Der Rechner ist dann anstelle der zu simulierenden Peripherieeinheit über einen der Kommunikationsanschlüsse an die Steuereinrichtung angebunden. Die Steuereinrichtung als solche bleibt dabei unverändert. Diese Vorgehensweise ist bereits erheblich vorteilhafter, da hier nur kleinere Simulationen erforderlich sind, die erheblich leichter und einfacher zu realisieren sind. Ferner ist es mittels dieser Vorgehensweise möglich, nur eine Teilsimulation vorzunehmen, das heißt nur ein Teil der Peripherieeinheiten wird durch entsprechend programmierte Rechner ersetzt. Die übrigen, nicht simulierten Peripherieeinheiten sind real vorhanden und steuern real einen Teil des industriellen technischen Prozesses. Diese letztgenannte Art der Simulation wird daher im Stand der Technik tatsächlich ergriffen und ist unter der Bezeichnung "Hardware-in-the-Loop" bekannt.

Auch diese letztgenannte Art der Simulation ist aber nicht frei von Nachteilen. So ist es insbesondere erforderlich, für jede zu simulierende Peripherieeinheit die Peripherieeinheit und deren Verhalten sowie den korrespondierenden Teil des industriellen technischen Prozesses in einem eigenständigen Gerät zu realisieren und das Gerät an die Steuereinrichtung anzubinden.

Derartige Lösungen sind aus den Dokumenten EP-A-0283382 und DE 195 43 826 A1 bekannt.

Die Aufgabe der vorliegenden Erfindung besteht darin, eine Steuereinrichtung der eingangs genannten Art derart zu modifizieren, dass mittels der Steuereinrichtung eine Simulation möglich ist, ohne dass Simulationseinrichtungen an die Steuereinrichtung angebunden werden müssen.

Die Aufgabe wird durch eine Steuereinrichtung mit den Merkmalen des Anspruchs 1 gelöst. Erfindungsgemäß ist somit der Steuereinrichtung vorgebbar, ob und gegebenenfalls welche der Peripherieeinheiten simuliert werden. Zumindest bezüglich der simulierten Peripherieeinheiten implementiert die Steuereinrichtung zusätzlich zum Steuerungsprozess ein Modell des industriellen technischen Prozesses. Auch werden bezüglich der simulierten Peripherieeinheiten die Eingangsdaten dem Steuerungsprozess vom Modell zur Verfügung gestellt und stellt der Steuerungsprozess die Ausgangsdaten dem Modell zur Verfügung. Bezüglich der nicht simulierten Peripherieeinheiten hingegen werden die Eingangsdaten dem Steuerungsprozess weiterhin über die Kommunikationsanschlüsse zur Verfügung gestellt und stellt der Steuerungsprozess weiterhin die Ausgangsdaten zur Ausgabe über die Kommunikationsanschlüsse zur Verfügung. Bezüglich der nicht simulierten Peripherieeinheiten verhält sich die Steuereinrichtung also wie im Normalbetrieb, in welchem sie den industriellen technischen Prozess real steuert.

Durch diese Vorgehensweise kann die Simulation innerhalb der Steuereinrichtung erfolgen. Die einzigen anzuschließenden Elemente sind die real vorhandenen, nicht zu simulierenden Peripherieeinheiten.

Im Stand der Technik werden die Eingangsdaten dem Steuerungsprozess in der Regel dadurch zur Verfügung gestellt, dass sie von den Peripherieeinheiten in einen Datenaustauschspeicherbereich eingeschrieben werden. Sie bilden dort das sogenannte Prozessabbild der Eingänge. Ebenso stellt der Steuerungsprozess im Stand der Technik die Ausgangsdaten in der Regel dadurch zur Verfügung, dass er sie in den Datenaustauschspeicherbereich einschreibt. Sie bilden dort das sogenannte Prozessabbild der Ausgänge. Die Kombination des Prozessabbildes der Eingänge und des Prozessabbildes der Ausgänge wird im Stand der Technik oftmals kurz als Prozessabbild bezeichnet.

Die zuletzt erläuterte Vorgehensweise des Standes der Technik wird vom Ansatz her beibehalten. Allerdings werden die Eingangsdaten teilweise vom Modell in den Datenaustauschspeicherbereich eingeschrieben und werden die Ausgangsdaten teilweise vom Modell aus dem Datenaustauschspeicherbereich ausgelesen.

Zur konkreten Implementierung sind verschiedene Vorgehensweisen möglich. So ist es beispielsweise möglich,
- dass der Datenaustauschspeicherbereich einen Modellbereich und einen Peripheriebereich aufweist,
- dass der Steuerungsprozess die dem Modell zur Verfügung gestellten Ausgangsdaten in den Modellbereich einschreibt und die vom Modell zur Verfügung gestellten Eingangsdaten aus dem Modellbereich ausliest und
- dass der Steuerungsprozess die den nicht simulierten Peripherieeinheiten zur Verfügung gestellten Ausgangsdaten in den Peripheriebereich einschreibt und die von den Peripherieeinheiten zur Verfügung gestellten Eingangsdaten aus dem Peripheriebereich ausliest.

Denn dann können die mit dem Modell auszutauschenden Daten getrennt von den mit den Peripherieeinheiten auszutauschenden Daten verwaltet werden.

Es ist möglich, dass der Modellbereich ein in sich zusammenhängender Speicherbereich ist, der derart dimensioniert ist, dass er durch die von dem Modell zur Verfügung gestellten Eingangsdaten und die dem Modell zur Verfügung zu stellenden Ausgangsdaten ausgeschöpft ist. In diesem Fall ist der Modellbereich speicherplatzoptimiert. Ebenso ist es möglich, dass der Peripheriebereich ein in sich zusammenhängender Speicherbereich ist, der derart dimensioniert ist, dass er durch die von den Peripherieeinheiten zur Verfügung gestellten Eingangsdaten und die den Peripherieeinheiten zur Verfügung zu stellenden Ausgangsdaten ausgeschöpft ist. In diesem Fall ist der Peripheriebereich ebenfalls speicherplatzoptimiert.

Es ist aber auch möglich, dass der Modellbereich und der Peripheriebereich jeweils in sich zusammenhängende Speicherbereiche sind, die jeweils derart dimensioniert sind, dass sie durch die vom Steuerungsprozess insgesamt zur Verfügung gestellten Ausgangsdaten und durch die dem Steuerungsprozess insgesamt zur Verfügung zu stellenden Eingangsdaten ausgeschöpft sind. In diesem Fall ist die Verwaltung der Eingangs- und Ausgangsdaten oftmals einfacher handhabbar. Dies gilt ganz besonders dann, wenn die Speicherbereiche jeweils eine Anzahl von aufeinanderfolgenden Speicherzellen aufweisen, so dass die Speicherzellen des Modellbereichs und des Peripheriebereichs paarweise miteinander korrespondieren, und von jedem Paar miteinander korrespondierender Speicherzellen je eine genutzt wird und eine unbenutzt bleibt.

Alternativ zu einer getrennten Verwaltung der mit dem Modell und den Peripherieeinheiten auszutauschenden Daten ist es aber auch möglich, den Datenaustauschspeicherbereich als gemeinsamen Datenaustauschspeicherbereich zu nutzen. In diesem Fall ist der Datenaustauschspeicherbereich vorzugsweise ein in sich zusammenhängender Speicherbereich, der derart dimensioniert ist, dass er durch die vom Steuerungsprozess zur Verfügung gestellten Ausgangsdaten und die dem Steuerungsprozess zur Verfügung zu stellenden Eingangsdaten ausgeschöpft ist.

Wenn dem Datenaustauschspeicherbereich eine Zuordnungseinrichtung zugeordnet ist, welche je nachdem, ob die jeweilige Peripherieeinheit simuliert ist oder nicht, die Eingangsdaten vom Modell bzw. über einen der Kommunikationsanschlüsse entgegen nimmt und die Ausgangsdaten dem Modell bzw. einem der Kommunikationsanschlüsse zuführt, ist die Steuereinrichtung besonders flexibel betreibbar. Derartige Zuordnungseinrichtungen sind als Router allgemein bekannt.

Wenn der Steuerungsprozess auf den Datenaustauschspeicherbereich über Treiberprogramme zugreift, ist der Zugriff auf den Datenaustauschspeicherbereich vom Steuerungsprozess aus gesehen auch bei komplexen Datenstrukturen relativ einfach.

Wenn jedes der Treiberprogramme einer der Peripherieeinheiten zugeordnet ist und je nachdem, ob die zugeordnete Peripherieeinheit simuliert wird oder nicht, ausschließlich auf den Modellbereich oder den Peripheriebereich zugreift, ist die Datenverwaltung noch einfacher.

Es ist möglich, dass die Vorgabe, welche der Peripherieeinheiten simuliert werden, nur vor der ersten Iteration möglich ist. In diesem Fall ist die Vorgabe der zu simulierenden Peripherieeinheiten statisch. Es ist aber auch möglich, dass diese Vorgabe während der iterativen Abarbeitung der Folge von Steueranweisungen änderbar ist. In diesem Fall ist die Vorgabe der zu simulierenden Peripherieeinheiten dynamisch.

Die Kommunikationsanschlüsse können als proprietäre Kommunikationsanschlüsse betrieben werden. In diesem Fall ist pro Peripherieeinheit ein eigener Kommunikationsanschluss erforderlich. Vorzugsweise aber betreibt die Steuereinrichtung die Kommunikationsanschlüsse als Busanschlüsse.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung:
- FIG 1: ein Blockschaltbild eines Steuerungssystems zur Steuerung eines industriellen technischen Prozesses,
- FIG 2: schematisch den Zugriff auf einen Datenaustauschspeicherbereich,
- FIG 3: ein Ablaufdiagramm,
- FIG 4: den Inhalt eines Konfigurationsspeichers,
- FIG 5 bis 7: verschiedene Organisationsformen für den Datenaustauschspeicherbereich von FIG 2 und
- FIG 8 und 9: Ablaufdiagramme.

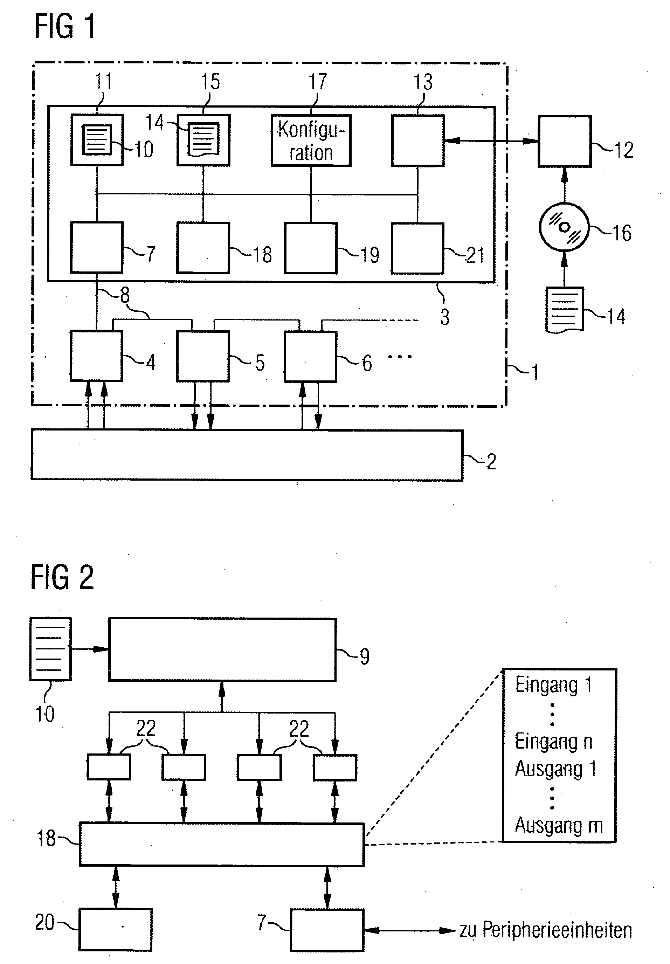

Gemäß FIG 1 soll mittels eines Steuerungssystems 1 ein industrieller technischer Prozess 2 gesteuert werden, der außerhalb des Steuerungssystems 1 abläuft. Beispiele derartiger industrieller Prozesse 2 sind eine Bearbeitung eines Werkstücks durch eine Werkzeugmaschine, die mittels des Steuerungssystems 1 gesteuert wird, oder der Betrieb einer Verpackungsmaschine, die mittels des Steuerungssystems 1 gesteuert wird.

Das Steuerungssystem 1 weist eine Steuereinrichtung 3 und externe Peripherieeinheiten 4 bis 6 auf. Die dargestellte Anzahl von Peripherieeinheiten 4 bis 6 ist dabei rein beispielhaft. In dem erstgenannten Beispiel eines industriellen technischen Prozesses 2 (Bearbeitung eines Werkstücks) ist die Steuereinrichtung 3 als numerische Steuerung ausgebildet, im zweitgenannten Beispiel (Betrieb einer Verpackungsmaschine) als speicherprogrammierbare Steuerung.

Die Peripherieeinheiten 4 bis 6 können reine Eingabebaugruppen sein. In diesem Fall nehmen sie vom industriellen technischen Prozess 2 ausschließlich Prozesssignale entgegen und stellen sie - gegebenenfalls nach entsprechender Umwandlung und Aufbereitung - als Eingangsdaten der Steuereinrichtung 3 zur Verfügung. Sie geben selbst aber keine Steuersignale an den industriellen technischen Prozess 2 aus. Ein Beispiel einer derartigen Peripherieeinheit ist die Peripherieeinheit 4.

Umgekehrt können die Peripherieeinheiten 4 bis 6 auch reine Ausgabebaugruppen sein. In diesem Fall nehmen sie vom industriellen technischen Prozess 2 keinerlei Prozesssignale entgegen, geben aber Steuersignale an den industriellen technischen Prozess 2 aus. Die Steuersignale ermitteln sie dabei anhand von Ausgangssignalen, die ihnen von der Steuereinrichtung 3 zur Verfügung gestellt werden. Ein Beispiel einer derartigen Peripherieeinheit ist die Peripherieeinheit 5.

Weiterhin ist es auch möglich, dass die Peripherieeinheiten 4 bis 6 gemischte Baugruppen sind, die also sowohl Prozesssignale vom industriellen technischen Prozess 2 entgegen nehmen und der Steuereinrichtung 3 zur Verfügung stellen als auch von der Steuereinrichtung 3 Ausgangsdaten entgegen nehmen und als Steuersignale an den industriellen technischen Prozess 2 ausgeben. Ein Beispiel einer derartigen Peripherieeinheit ist die Peripherieeinheit 6.

Wie aus FIG 1 ersichtlich ist, weist die Steuereinrichtung 3 einen Kommunikationsanschluss 7 auf, über den die Peripherieeinheiten 4 bis 6 an die Steuereinrichtung 3 angebunden sind. Die Anbindung ist dabei lösbar. Hierzu kann der Kommunikationsanschluss 7 beispielsweise Schraubklemmen oder einen Steckverbinder aufweisen. Da weiterhin über den Kommunikationsanschluss 7 ersichtlich mehrere Peripherieeinheiten 4 bis 6 an die Steuereinrichtung 3 angebunden sind, betreibt die Steuereinrichtung 3 den Kommunikationsanschluss 7 als Busanschluss 7. Ein Beispiel eines geeigneten Busses 8 ist beispielsweise der PROFIBUS.

Gemäß FIG 1 ist nur ein einziger Kommunikationsanschluss 7 vorhanden. Die Steuereinrichtung 3 könnte aber selbstverständlich auch mehr als einen Kommunikationsanschluss 7 aufweisen. Bei einer derartigen Ausgestaltung wäre es gegebenenfalls auch möglich, dass über jeden der Kommunikationsanschlüsse 7 jeweils nur eine einzige Peripherieeinheit 4 bis 6 an die Steuereinrichtung 3 anbindbar ist.

In FIG 1 ist die Peripherieeinheit 6 nur gestrichelt eingezeichnet. Der Grund hierfür ist, dass - gemäß Ausführungsbeispiel - angenommen wird, dass die Peripherieeinheit 6 nicht real vorhanden ist, sondern simuliert wird. Diese Annahme ist aber rein beispielhaft und nicht zwingend. Prinzipiell kann eine beliebige Anzahl von Peripherieeinheiten 4 bis 6 (minimal keine Peripherieeinheit 4 bis 6, maximal alle Peripherieeinheiten 4 bis 6) als simuliert angenommen werden. Auch können beliebige der Peripherieeinheiten 4 bis 6 als simuliert angenommen werden.

Die Steuereinrichtung 3 ist gemäß FIG 1 als softwaregesteuerte Steuereinrichtung 3 ausgebildet, beispielsweise als speicherprogrammierbare Steuerung oder als numerische Steuerung. Sie implementiert daher - siehe FIG 2 - im Betrieb einen Steuerungsprozess 9. Im Rahmen des Steuerungsprozesses 9 arbeitet die Steuereinrichtung 3 iterativ eine Folge 10 von Steueranweisungen - nachfolgend kurz auch Steuerprogramm 10 genannt - ab, die eine Steuerungsvorschrift für den industriellen technischen Prozess 2 darstellt.

Das Steuerprogramm 10 muss in einem Anwenderprogrammspeicher 11 der Steuereinrichtung 3 abgespeichert sein. Dieses Abspeichern kann beispielsweise mittels eines Programmiergeräts 12 erfolgen, das über eine geeignete Schnittstelle 13 an die Steuereinrichtung 3 ankoppelbar ist.

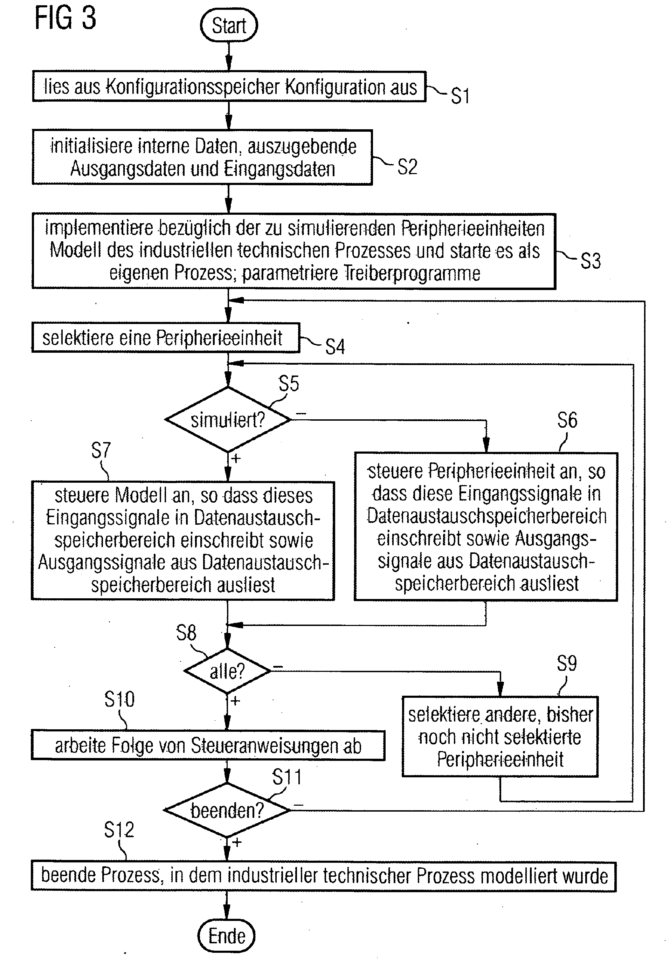

Mittels des Programmiergeräts 12 kann gegebenenfalls auch ein Computerprogramm 14 in einen Systemprogrammspeicher 15 der Steuereinrichtung 3 eingeschrieben werden. Dieses Computerprogramm 14 legt die prinzipielle Wirkungsweise der Steuereinrichtung 3 fest, die nachfolgend in Verbindung mit FIG 3 näher erläutert wird. Das Computerprogramm 14 kann dem Programmiergerät 12 gegebenenfalls über einen geeigneten Datenträger 16 zugeführt werden, auf dem das Computerprogramm 14 ebenfalls gespeichert ist.

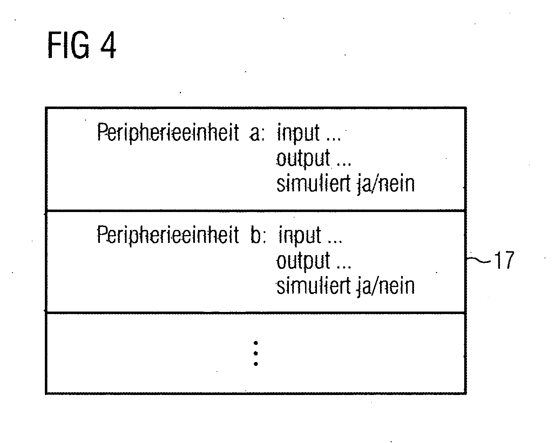

Gemäß FIG 3 liest die Steuereinrichtung 3 in einem Schritt S1 zunächst eine Konfiguration des Steuerungssystems 1 aus einem Konfigurationsspeicher 17 aus. Der Konfigurationsspeicher 17 enthält dabei gemäß FIG 4 eine Auflistung der Peripherieeinheiten 4 bis 6 sowie für jede aufgelistete Peripherieeinheit 4 bis 6 eine Angabe über die von dieser Peripherieeinheit 4 bis 6 zur Verfügung gestellten Eingangsdaten, eine Angabe über die dieser Peripherieeinheit 4 bis 6 zur Verfügung zu stellenden Ausgangsdaten und eine Angabe darüber, ob die jeweilige Peripherieeinheit 4 bis 6 simuliert werden soll. Die Konfigurationsdaten können beispielsweise mittels des Programmiergeräts 12 in den Konfigurationsspeicher 17 eingeschrieben worden sein. Insbesondere ist auf diese Weise somit der Steuereinrichtung 3 vorgebbar, ob Peripherieeinheiten 4 bis 6 simuliert werden und welche Peripherieeinheiten 4 bis 6 dies gegebenenfalls sind.

In einem Schritt S2 initialisiert die Steuereinrichtung 3 interne Daten, auszugebende Ausgangsdaten und Eingangsdaten. Die Eingangsdaten und die Ausgangsdaten werden dabei in einen Datenaustauschspeicherbereich 18 eingeschrieben, die internen Daten in einen Arbeitsspeicher 19.

In einem Schritt S3 implementiert die Steuereinrichtung 3 sodann zumindest bezüglich der zu simulierenden Peripherieeinheiten 4 bis 6 - gemäß Ausführungsbeispiel also bezüglich der Peripherieeinheit 6 - ein Modell 20 des industriellen technischen Prozesses 2 und startet es als eigenen Prozess. Dieser Prozess wird also von einem Mikroprozessor 21 der Steuereinrichtung 3 zusätzlich zum eigentlichen Steuerungsprozess 9 ausgeführt, der in Verbindung mit FIG 3 dargestellt ist.

Je nach Lage des Einzelfalls kann es erforderlich sein, dass das Modell 20 den gesamten industriellen technischen Prozess 2 modelliert. Im Regelfall wird es aber ausreichen, wenn das Modell 20 nur einen Teil des industriellen technischen Prozesses 2 modelliert.

Weiterhin parametriert die Steuereinrichtung 3 im Rahmen des Schrittes S3 auch Treiberprogramme 22. Hierauf wird später noch näher eingegangen werden.

In einem Schritt S4 selektiert die Steuereinrichtung 3 eine der Peripherieeinheiten 4 bis 6. In einem Schritt S5 prüft sie, ob die selektierte Peripherieeinheit 4 bis 6 zu simulieren ist oder real vorhanden ist. Je nach dem Ergebnis dieser Prüfung führt die Steuereinrichtung 3 einen Schritt S6 oder einen Schritt S7 aus.

Im Schritt S6 steuert die Steuereinrichtung 3 - selbstverständlich über den Kommunikationsanschluss 7 - die selektierte, real vorhandene Peripherieeinheit 4 bis 6 an und veranlasst diese Peripherieeinheit 4 bis 6 dazu, vom industriellen technischen Prozess 2 Prozesssignale einzulesen, diese in Eingangssignale zu wandeln und die Eingangssignale über den Kommunikationsanschluss 7 in den Datenaustauschspeicherbereich 18 einzuschreiben. Die nicht simulierten Peripherieeinheiten 4 bis 6 stellen somit ihre Eingangsdaten über den Kommunikationsanschluss 7 dem Steuerungsprozess 9 zur Verfügung.

Weiterhin veranlasst die Steuereinrichtung 3 die selektierte, real vorhandene Peripherieeinheit 4 bis 6 im Schritt S6 auch dazu, die für diese Peripherieeinheit 4 bis 6 bestimmten Ausgangssignale aus dem Datenaustauschspeicherbereich 18 auszulesen und als Steuersignale an den industriellen technischen Prozess 2 auszugeben. Die für die real vorhandenen, nicht simulierten Peripherieeinheiten 4 bis 6 bestimmten Ausgangsdaten werden diesen Peripherieeinheiten 4 bis 6 somit über den Kommunikationsanschluss 7 zur Verfügung gestellt.

Im Schritt S7 ergreift die Steuereinrichtung 3 eine prinzipiell gleich gelagerte Vorgehensweise. Der Unterschied des Schrittes S7 zum Schritt S6 besteht darin, dass im Rahmen des Schrittes S7 nicht eine real vorhandene Peripherieeinheit 4 bis 6 angesteuert wird, welche daraufhin entsprechende Maßnahmen ergreift, sondern das Modell 20. Es wird also im Rahmen des Schrittes S7 das Modell 20 dazu veranlasst, die Eingangsdaten in den Datenaustauschspeicherbereich 18 einzuschreiben und die Ausgangsdaten aus dem Datenaustauschspeicherbereich 18 auszulesen.

In einem Schritt S8 prüft die Steuereinrichtung 3 sodann, ob sie die Schritte S5 bis S7 bereits für alle Peripherieeinheiten 4 bis 6 durchgeführt hat. Wenn dies nicht der Fall ist, selektiert die Steuereinrichtung 3 in einem Schritt S9 eine andere, bisher noch nicht selektierte Peripherieeinheit 4 bis 6 und geht zum Schritt S5 zurück. Anderenfalls setzt sie das Verfahren mit einem Schritt S10 fort.

Im Rahmen des Schrittes S10 arbeitet die Steuereinrichtung 3 die Folge 10 von Steueranweisungen einmal ab. Im Rahmen der Abarbeitung der Folge 10 von Steueranweisungen greift sie auf die im Datenaustauschspeicherbereich 18 gespeicherten Eingangsdaten zu und ermittelt anhand der Eingangsdaten und der im Arbeitsspeicher 19 gespeicherten internen Daten neue Ausgangsdaten. Die neuen Ausgangsdaten speichert sie im Datenaustauschspeicherbereich 18 ab und stellt sie so den nicht simulierten Peripherieeinheiten 4 bis 6 und dem Modell 20 zur Verfügung. Weiterhin ermittelt die Steuereinrichtung 3 anhand der Eingangsdaten und der internen Daten auch neue interne Daten und speichert diese im Arbeitsspeicher 19 ab. Sowohl die Ausgangsdaten als auch die internen Daten werden somit anhand der internen Daten und der Eingangsdaten aktualisiert.

In einem Schritt S11 prüft die Steuereinrichtung 3 sodann, ob sie die Abarbeitung der Folge 10 von Steueranweisungen beenden soll. Wenn dies nicht der Fall ist, geht die Steuereinrichtung 3 zum Schritt S4 zurück. Anderenfalls beendet die Steuereinrichtung 3 in einem Schritt S12 den Prozess, in dem sie den industriellen technischen Prozess 2 zumindest teilweise modelliert hat.

Wie aus FIG 2 schematisch ersichtlich ist, greifen - logisch gesehen - auf den Datenaustauschspeicherbereich 18 der Steuerungsprozess 9, das Modell 20 und - über den Kommunikationsanschluss 7 - die nicht simulierten Peripherieeinheiten 4 bis 6 zu. Die nicht simulierten Peripherieeinheiten 4 bis 6 und das Modell 20 schreiben dabei ihre jeweiligen Eingangsdaten in den Datenaustauschspeicherbereich 18 ein und stellen sie so dem Steuerungsprozess 9 zur Verfügung. Umgekehrt schreibt der Steuerungsprozess 9 seine Ausgangsdaten in den Datenaustauschspeicherbereich 18 ein und stellt sie so dem Modell 20 und den nicht simulierten Peripherieeinheiten 4 bis 6 zur Verfügung. Der Datenaustauschspeicherbereich 18 enthält somit das sogenannte Prozessabbild.

Wie weiterhin aus FIG 2 ersichtlich ist, greift der Steuerungsprozess 9 - und zwar sowohl lesend als auch schreibend - auf den Datenaustauschspeicherbereich 18 nur über Treiberprogramme 22 zu. Diese Vorgehensweise ist zwar nicht zwingend erforderlich, aber von großem Vorteil, um leichter inkonsistente Daten vermeiden zu können.

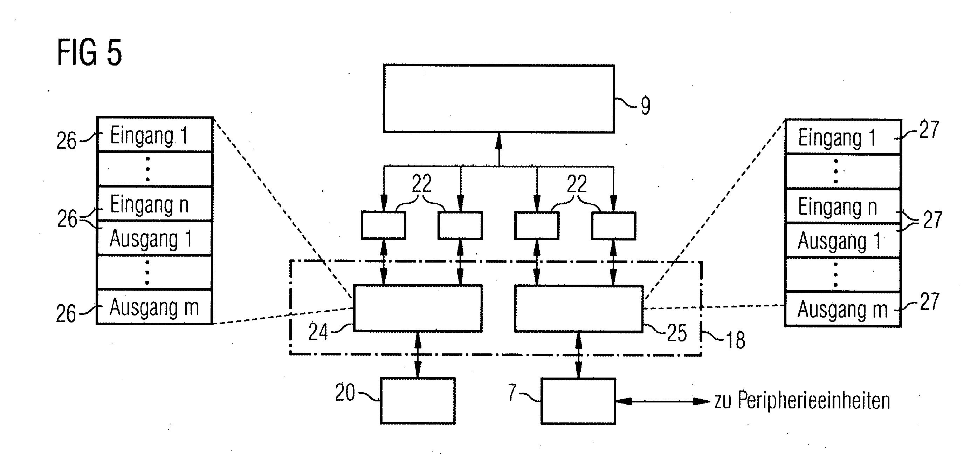

Die nachfolgenden FIG 5 bis 9 zeigen nunmehr Ausgestaltungen des oben stehend in Verbindung mit den FIG 1 bis 4 erläuterten Grundprinzips.

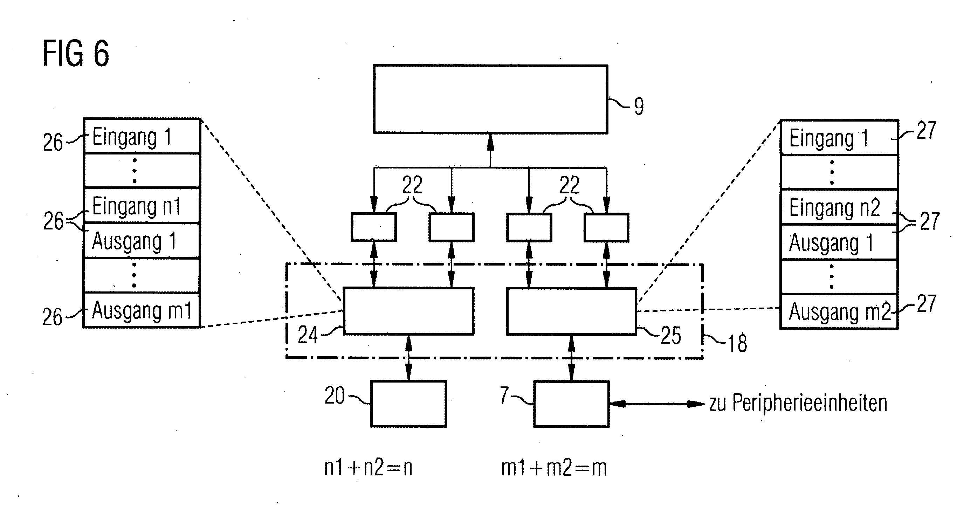

Gemäß den FIG 5 und 6 beispielsweise erfolgt eine Aufteilung des Datenaustauschspeicherbereichs 18 in einen Modellbereich 24 und einen Peripheriebereich 25. Sowohl bei FIG 5 als auch bei FIG 6 schreibt der Steuerungsprozess 9 die dem Modell 20 zur Verfügung gestellten Ausgangsdaten in den Modellbereich 24 ein, nicht aber in den Peripheriebereich 25. Das Modell 20 liest die Ausgangsdaten dann auch aus dem Modellbereich 24 aus. Auch schreibt das Modell 20 die von ihm zur Verfügung gestellten Eingangsdaten ausschließlich in den Modellbereich 24 ein und liest der Steuerungsprozess 9 diese Eingangsdaten aus dem Modellbereich 24 aus. Umgekehrt schreibt der Steuerungsprozess 9 die den nicht simulierten Peripherieeinheiten 4 bis 6 zur Verfügung gestellten Ausgangsdaten in den Peripheriebereich 25 ein, nicht aber in den Modellbereich 24. Die Peripherieeinheiten 4 bis 6 lesen diese Ausgangsdaten aus dem Peripheriebereich 25 aus. Auch schreiben die real vorhandenen, nicht simulierten Peripherieeinheiten 4 bis 6 die von ihnen zur Verfügung gestellten Eingangsdaten ausschließlich in den Peripheriebereich 25 ein und liest der Steuerungsprozess 9 diese Eingangsdaten aus dem Peripheriebereich 25 aus.

Aus den FIG 5 und 6 ist auch ersichtlich, dass jedes Treiberprogramm 22 einer einzigen der Peripherieeinheiten 4 bis 6 (simuliert oder nicht simuliert) zugeordnet ist. Denn es ist möglich, die Treiberprogramme 23 derart zu parametrieren, dass sie je nachdem, ob die zugeordnete Peripherieeinheit 4 bis 6 simuliert wird oder nicht, ausschließlich auf den Modellbereich 24 bzw. ausschließlich auf den Peripheriebereich 25 zugreifen.

Gemäß FIG 5 sind der Modellbereich 24 und der Peripheriebereich 25 jeweils in sich zusammenhängende Speicherbereiche 24, 25, die jeweils eine Anzahl von aufeinander folgenden Speicherzellen 26, 27 aufweisen. Jeder dieser beiden Speicherbereiche 24, 25 ist dabei derart dimensioniert, dass sie erst durch die vom Steuerungsprozess 9 insgesamt zur Verfügung gestellten Ausgangsdaten und die dem Steuerungsprozess 9 insgesamt zur Verfügung zu stellenden Eingangsdaten ausgeschöpft sind. Soweit es die Größe der beiden Speicherbereiche 24, 25 betrifft, könnte also jeder der beiden Speicherbereiche 24, 25 das gesamte Prozessabbild speichern. Speicherplatz ist also redundant vorhanden. Durch die großzügige Dimensionierung der Speicherbereiche 24, 25 ist es aber möglich, dass die ersten, zweiten, dritten usw. Speicherzellen 26, 27 der Speicherbereiche 24, 25 paarweise miteinander korrespondieren. Jede Speicherzelle 26, 27 eines bestimmten Paares kann daher für die prinzipiell gleiche Variable vorgesehen werden, je nachdem, ob die jeweilige Variable modelliert oder real ist. Dadurch wird somit zwar von jedem Paar miteinander korrespondierender Speicherzellen 26, 27 nur eine genutzt, während die andere unbenutzt bleibt. Die Speicherzuordnung und die Auslegung der Treiberprogramme 22 und auch der Zugriff durch den Steuerungsprozess 9, das Modell 20 und die real vorhandenen Peripherieeinheiten 4 bis 6 gestaltet sich aber erheblich einfacher.

Im Unterschied hierzu sind bei der Ausgestaltung gemäß FIG 6 der Modellbereich 24 und der Peripheriebereich 25 speicherplatzoptimiert. Der Modellbereich 24 ist also derart dimensioniert, dass er durch die von dem Modell 20 zur Verfügung gestellten Eingangsdaten und die dem Modell 20 zur Verfügung zu stellenden Ausgangsdaten ausgeschöpft ist. Analog hierzu ist der Peripheriebereich 25 derart dimensioniert, dass er durch die von den real vorhandenen Peripherieeinheiten 4 bis 6 zur Verfügung gestellten Eingangsdaten und die den real vorhandenen Peripherieeinheiten 4 bis 6 zur Verfügung zu stellenden Ausgangsdaten ausgeschöpft ist.

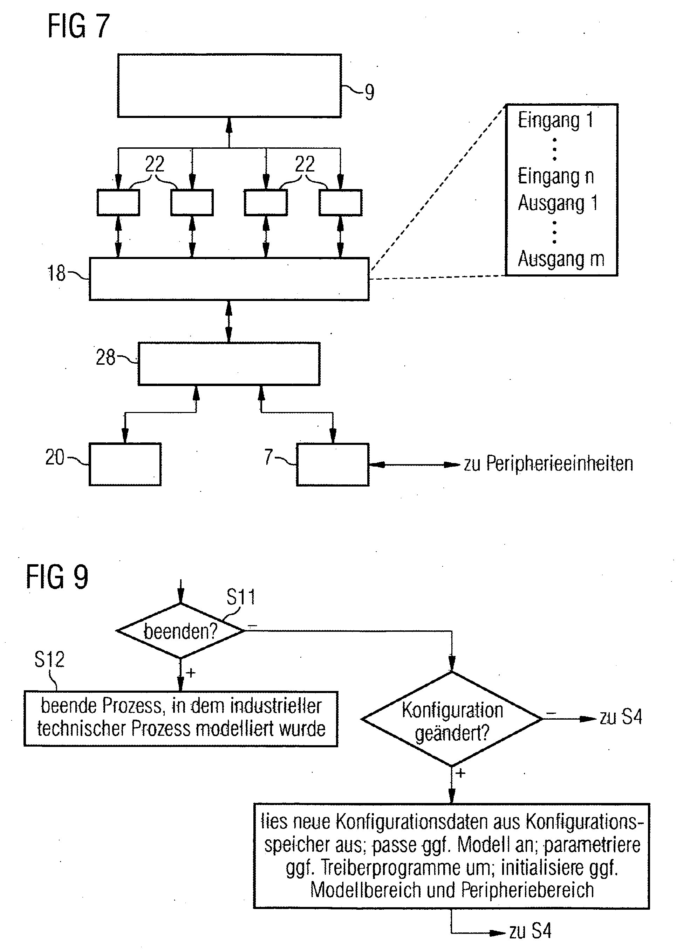

Im Unterschied zu den FIG 5 und 6 ist bei der Ausgestaltung gemäß FIG 7 der Datenaustauschspeicherbereich 18 ein einziger in sich zusammenhängender Speicherbereich 18, der derart dimensioniert ist, dass er durch die von dem Steuerungsprozess 9 zur Verfügung gestellten Ausgangssignale und die dem Steuerungsprozess 9 zur Verfügung zu stellenden Eingangssignale ausgeschöpft ist. In diesem Fall ist der Datenaustauschspeicherbereich 18 also ein "gemischter" Datenaustauschspeicherbereich 18: Weder anhand der im Datenaustauschspeicherbereich 18 hinterlegten Daten noch anhand des Speicherortes der Daten innerhalb des Datenaustauschspeicherbereichs 18 ist erkennbar, ob die Daten mit dem Modell 20 oder mit den real vorhandenen, nicht simulierten Peripherieeinheiten 4 bis 6 ausgetauscht werden. Aus diesem Grund ist bei der Ausgestaltung gemäß FIG 7 auch die Parametrierung der Treiberprogramme 22 unabhängig davon, ob Peripherieeinheiten 4 bis 6 simuliert werden und welche Peripherieeinheiten 4 bis 6 dies gegebenenfalls sind.

Auch bei der Ausgestaltung gemäß FIG 7 muss natürlich gewährleistet sein, dass die für das Modell 20 bestimmten Ausgangsdaten dem Modell 20 zugeführt werden, die für die real vorhandenen Peripherieeinheiten 4 bis 6 bestimmten Ausgangsdaten über den Kommunikationsanschluss 7 den real vorhandenen Peripherieeinheiten 4 bis 6 zugeführt werden, die vom Modell 20 zur Verfügung gestellten Eingangsdaten vom Modell 20 entgegen genommen werden und die von den real vorhandenen Peripherieeinheiten 4 bis 6 zur Verfügung gestellten Eingangsdaten über den Kommunikationsanschluss 7 von den Peripherieeinheiten 4 bis 6 entgegen genommen werden. Aus diesem Grund ist dem Datenaustauschspeicherbereich 18 eine Zuordnungseinrichtung 28 zugeordnet. Die Zuordnungseinrichtung 28 nimmt je nachdem, ob die jeweilige Peripherieeinheit 4 bis 6 simuliert ist oder nicht, die Eingangsdaten vom Modell 20 bzw. über den Kommunikationsanschluss 7 von der jeweiligen Peripherieeinheit 4 bis 6 entgegen. Auch führt sie die Ausgangsdaten je nachdem, ob die jeweilige Peripherieeinheit 4 bis 6 simuliert ist oder nicht, dem Modell 20 bzw. über den Kommunikationsanschluss 7 der jeweiligen Peripherieeinheit 4 bis 6 zu.

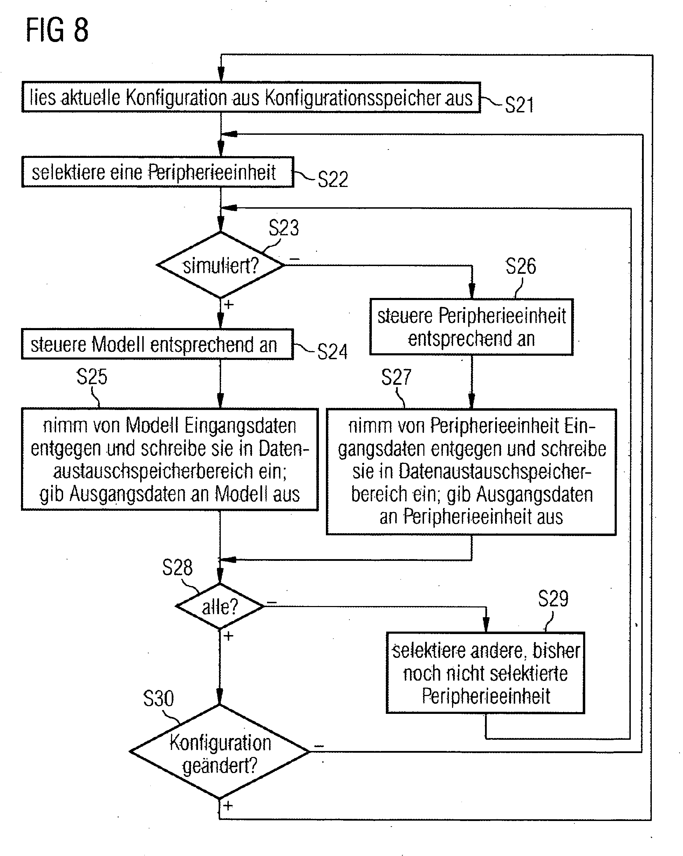

Die Zuordnungseinrichtung 28 hat somit die Funktion eines Routers. Derartige Router sind für Datenübertragungseinrichtungen allgemein bekannt, so dass im Rahmen der vorliegenden Erfindung von Detailerläuterungen zur Zuordnungseinrichtung 28 abgesehen werden kann. Lediglich die prinzipielle Funktionsweise wird nachstehend in Verbindung mit FIG 8 nochmals kurz erläutert.

Gemäß FIG 8 liest die Zuordnungseinrichtung 28 in einem Schritt S21 zunächst die aktuelle Konfiguration des Steuerungssystems 1 aus dem Konfigurationsspeicher 17 aus. In einem Schritt S22 selektiert sie dann eine der Peripherieeinheiten 4 bis 6. In einem Schritt S23 prüft die Zuordnungseinrichtung 28, ob die selektierte Peripherieeinheit 4 bis 6 simuliert wird oder real vorhanden ist.

Wenn die selektierte Peripherieeinheit 4 bis 6 simuliert wird, steuert die Zuordnungseinrichtung 28 in einem Schritt S24 das Modell 20 entsprechend an. In einem Schritt S25 nimmt sie sodann vom Modell 20 die Eingangsdaten der selektierten Peripherieeinheit 4 bis 6 entgegen und schreibt sie in den Datenaustauschspeicherbereich 18 ein. Auch gibt sie im Rahmen des Schrittes S25 die für die selektierte Peripherieeinheit 4 bis 6 bestimmten Ausgangsdaten an das Modell 20 aus.

Wenn die selektierte Peripherieeinheit 4 bis 6 nicht simuliert wird, also real vorhanden ist, steuert die Zuordnungseinrichtung 28 in einem Schritt S26 über den Kommunikationsanschluss 7 die selektierte Peripherieeinheit 4 bis 6 entsprechend an. Sodann nimmt sie in einem Schritt S27 von der selektierten Peripherieeinheit 4 bis 6 über den Kommunikationsanschluss 7 deren Eingangsdaten entgegen und schreibt sie in den Datenaustauschspeicherbereich 18 ein. Auch gibt sie im Rahmen des Schrittes S27 die für die selektierte Peripherieeinheit 4 bis 6 bestimmten Ausgangsdaten über den Kommunikationsanschluss 7 an die selektierte Peripherieeinheit 4 bis 6 aus.

In einem Schritt S28 prüft die Zuordnungseinrichtung 28, ob sie die Schritte S23 bis S27 bereits für alle Peripherieeinheiten 4 bis 6 durchgeführt hat. Wenn dies nicht der Fall ist, geht sie zu einem Schritt S29 über, in dem sie eine andere, bisher noch nicht selektierte Peripherieeinheit 4 bis 6 selektiert. Dann geht sie zum Schritt S23 zurück.

Wenn hingegen bereits alle Peripherieeinheiten 4 bis 6 selektiert waren, geht die Zuordnungseinrichtung 28 zu einem Schritt S30 über. Im Schritt S30 prüft die Zuordnungseinrichtung, ob sich die Konfiguration des Steuerungssystems 1 geändert hat. Wenn dies nicht der Fall ist, geht die Zuordnungseinrichtung 28 zum Schritt S22 zurück. Wenn sich die Konfiguration des Steuerungssystems 1 hingegen geändert hat, geht die Zuordnungseinrichtung zum Schritt S21 zurück.

Mittels der Vorgehensweise von FIG 8 ist somit eine dynamische Zuordnung der Peripherieeinheiten 4 bis 6 als simuliert bzw. nicht simuliert möglich. Die Vorgabe, welche der Peripherieeinheiten 4 bis 6 simuliert werden, ist also während der iterativen Abarbeitung der Folge 10 von Steueranweisungen möglich.

Im Gegensatz hierzu ist bei der Vorgehensweise gemäß FIG 3 die Vorgabe, welche der Peripherieeinheiten 4 bis 6 simuliert werden, nur vor der ersten Iteration möglich. Die Vorgabe ist in diesem Fall also statisch. Mittels der Modifikation von FIG 9 ist aber auch hier die Vorgabe dynamisierbar.

FIG 9 ist eine Ergänzung von FIG 3. Die Schritte S1 bis S12 von FIG 3 können dabei beibehalten werden. Bezüglich dieser Schritte wird daher nachstehend von einer nochmaligen Erläuterung abgesehen. Zusätzlich sind bei FIG 9 aber Schritte S13 und S14 vorhanden.

Im Schritt S13 prüft die Steuereinrichtung 3, ob die Konfiguration geändert worden ist. Ist dies nicht der Fall, geht die Steuereinrichtung 3 - ebenso wie bei FIG 3 - zum Schritt S4 zurück. Ist die Konfiguration hingegen geändert worden, wird der Schritt S14 ausgeführt und erst dann zum Schritt S4 zurückgegangen.

Im Schritt S14 liest die Steuereinrichtung 3 die neuen Konfigurationsdaten aus dem Konfigurationsspeicher 17 aus, passt das Modell 20, soweit erforderlich, entsprechend an und parametriert die Treiberprogramme 22 um, soweit dies erforderlich ist. Weiterhin initialisiert sie, soweit erforderlich, den Modellbereich 24 und den Peripheriebereich 25.

Mittels der erfindungsgemäß ausgebildeten Steuereinrichtung 3 und des korrespondierenden Datenträgers 16 ist somit auf einfache Weise sowohl eine vollständige als auch ein nur teilweise Simulation möglich, ohne - zusätzlich zur Steuereinrichtung 3 und den real vorhandenen Peripherieeinheiten 4 bis 6 - weitere Geräte zu benötigen.

## Patentansprüche

1. Steuereinrichtung mit einer Anzahl von Kommunikationsanschlüssen (7), über die jeweils eine Anzahl von externen Peripherieeinheiten (4-6) lösbar an die Steuereinrichtung anbindbar ist,
- wobei die Steuereinrichtung derart ausgebildet ist, dass sie im Betrieb einen Steuerungsprozess (9) implementiert, der iterativ eine Folge (10) von Steueranweisungen abarbeitet, die eine Steuerungsvorschrift für einen außerhalb der Steuereinrichtung ablaufenden industriellen technischen Prozess (2) darstellt,
- wobei der Steuerungsprozess (9) bei jeder Iteration auf Eingangsdaten zugreift, die dem Steuerungsprozess (9) zur Verfügung gestellt werden, anhand der Eingangsdaten und innerhalb des Steuerungsprozesses (9) gespeicherter interner Daten Ausgangsdaten ermittelt und die internen Daten aktualisiert und die Ausgangsdaten zur Verfügung stellt,
- wobei der Steuereinrichtung mittels Konfigurationsdaten vorgebbar ist, welche der Peripherieeinheiten (4-6) simuliert werden,
- wobei die Steuereinrichtung zusätzlich zum Steuerungsprozess (9) bezüglich der simulierten Peripherieeinheiten (4 - 6) ein Modell (20) des industriellen technischen Prozesses (2) implementiert, als eigenen Prozess startet und zusätzlich zum Steuerungsprozess ausführt,
- wobei bezüglich der simulierten Peripherieeinheiten (4-6) die Eingangsdaten dem Steuerungsprozess (9) vom Modell (20) zur Verfügung gestellt werden und der Steuerungsprozess (9) die Ausgangsdaten dem Modell (20) zur Verfügung stellt,
- wobei bezüglich der nicht simulierten Peripherieeinheiten (4-6) die Eingangsdaten dem Steuerungsprozess (9) über die Kommunikationsanschlüsse (7) zur Verfügung gestellt werden und der Steuerungsprozess (9) die Ausgangsdaten zur Ausgabe über die Kommunikationsanschlüsse (7) zur Verfügung stellt.

2. Steuereinrichtung nach Anspruch 1,
**dadurch gekennzeichnet,**
**dass** die Eingangsdaten dem Steuerungsprozess (9) **dadurch** zur Verfügung gestellt werden, dass sie von den nicht simulierten Peripherieeinheiten (4-6) bzw. dem Modell (20) in einen Datenaustauschspeicherbereich (18) eingeschrieben werden, und
**dass** der Steuerungsprozess (9) die Ausgangsdaten den nicht simulierten Peripherieeinheiten (4-6) bzw. dem Modell (20) **dadurch** zur Verfügung stellt, dass er die Ausgangsdaten in den Datenaustauschspeicherbereich (18) einschreibt.

3. Steuereinrichtung nach Anspruch 2,
**dadurch gekennzeichnet,**
- **dass** der Datenaustauschspeicherbereich (18) einen Modellbereich (24) und einen Peripheriebereich (25) aufweist,
- **dass** der Steuerungsprozess (9) die dem Modell (20) zur Verfügung gestellten Ausgangsdaten in den Modellbereich (24) einschreibt und die vom Modell (20) zur Verfügung gestellten Eingangsdaten aus dem Modellbereich (24) ausliest und
- **dass** der Steuerungsprozess (9) die den nicht simulierten Peripherieeinheiten (4-6) zur Verfügung gestellten Ausgangsdaten in den Peripheriebereich (25) einschreibt und die von den nicht simulierten Peripherieeinheiten (4 - 6) zur Verfügung gestellten Eingangsdaten aus dem Peripheriebereich (25) ausliest.

4. Steuereinrichtung nach Anspruch 3,
**dadurch gekennzeichnet ,**
**dass** der Modellbereich (24) ein in sich zusammenhängender Speicherbereich (24) ist, der derart dimensioniert ist, dass er durch die von dem Modell (20) zur Verfügung gestellten Eingangsdaten und die dem Modell (20) zur Verfügung zu stellenden Ausgangsdaten ausgeschöpft ist.

5. Steuereinrichtung nach Anspruch 3 oder 4,
**dadurch gekennzeichnet ,**
**dass** der Peripheriebereich (25) ein in sich zusammenhängender Speicherbereich (25) ist, der derart dimensioniert ist, dass er durch die von den nicht simulierten Peripherieeinheiten (4-6) zur Verfügung gestellten Eingangsdaten und die den nicht simulierten Peripherieeinheiten (4-6) zur Verfügung zu stellenden Ausgangsdaten ausgeschöpft ist.

6. Steuereinrichtung nach Anspruch 3,
**dadurch gekennzeichnet ,**
**dass** der Modellbereich (24) und der Peripheriebereich (25) jeweils in sich zusammenhängende Speicherbereiche (24, 25) sind, die jeweils derart dimensioniert sind, dass sie durch die vom Steuerungsprozess (9) insgesamt zur Verfügung gestellten Ausgangsdaten und die dem Steuerungsprozess (9) insgesamt zur Verfügung zu stellenden Eingangsdaten ausgeschöpft sind.

7. Steuereinrichtung nach Anspruch 6,
**dadurch gekennzeichnet ,**
**dass** der Modellbereich (24) und der Peripheriebereich (25) jeweils eine Anzahl von aufeinander folgenden Speicherzellen (26, 27) aufweisen, so dass die Speicherzellen (26, 27) des Modellbereichs (24) und des Peripheriebereichs (25) paarweise miteinander korrespondieren, und dass von jedem Paar miteinander korrespondierender Speicherzellen (26, 27) eine genutzt wird und eine unbenutzt bleibt.

8. Steuereinrichtung nach Anspruch 2,
**dadurch gekennzeichnet ,**
**dass** der Datenaustauschspeicherbereich (18) ein in sich zusammenhängender Speicherbereich (18) ist, der derart dimensioniert ist, dass er durch die vom Steuerungsprozess (9) zur Verfügung gestellten Ausgangsdaten und die dem Steuerungsprozess (9) zur Verfügung zu stellenden Eingangsdaten ausgeschöpft ist.

9. Steuereinrichtung nach einem der Ansprüche 2 bis 8,
**dadurch gekennzeichnet ,**
**dass** dem Datenaustauschspeicherbereich (18) eine Zuordnungseinrichtung (28) zugeordnet ist, welche je nachdem, ob die jeweilige Peripherieeinheit (4-6) simuliert ist oder nicht, die Eingangsdaten vom Modell (20) bzw. über einen der Kommunikationsanschlüsse (7) entgegen nimmt und die Ausgangsdaten dem Modell (20) bzw. einem der Kommunikationsanschlüsse (7) zuführt.

10. Steuereinrichtung nach einem der Ansprüche 2 bis 9,
**dadurch gekennzeichnet ,**
**dass** der Steuerungsprozess (9) auf den Datenaustauschspeicherbereich (18) über Treiberprogramme (22) zugreift.

11. Steuereinrichtung nach Anspruch 10 in Verbindung mit einem der Ansprüche 3 bis 7,
**dadurch gekennzeichnet ,**
**dass** jedes der Treiberprogramme (22) einer der Peripherieeinheiten (4-6) zugeordnet ist und dass jedes der Treiberprogramme (22) je nachdem, ob die zugeordnete Peripherieeinheit (4-6) simuliert wird oder nicht, ausschließlich auf den Modellbereich (24) oder den Peripheriebereich (25) zugreift.

12. Steuereinrichtung nach einem der Ansprüche 1 bis 11,
**dadurch gekennzeichnet ,**
**dass** die Vorgabe, welche der Peripherieeinheiten (4-6) simuliert werden, nur vor der ersten Iteration möglich ist.

13. Steuereinrichtung nach einem der Ansprüche 1 bis 11,
**dadurch gekennzeichnet ,**
**dass** die Vorgabe, welche der Peripherieeinheiten (4-6) simuliert werden, während der iterativen Abarbeitung der Folge (10) von Steueranweisungen änderbar ist.

14. Steuereinrichtung nach einem der obigen Ansprüche,
**dadurch gekennzeichnet ,**
**dass** die Steuereinrichtung derart ausgebildet ist, dass sie die Kommunikationsanschlüsse (7) als Busanschlüsse betreibt.

15. Steuereinrichtung nach einem der obigen Ansprüche,
**dadurch gekennzeichnet ,**
**dass** die Steuereinrichtung als speicherprogrammierbare Steuerung oder als numerische Steuerung ausgebildet ist.

16. Steuereinrichtung nach einem der obigen Ansprüche,
**dadurch gekennzeichnet ,**
**dass** sie einen Systemprogrammspeicher (15) aufweist, in dem ein Computerprogramm (14) für die Steuereinrichtung hinterlegt ist, und dass die Steuereinrichtung aufgrund des Computerprogramms (14) gemäß einem der obigen Ansprüche ausgebildet ist.

17. Datenträger mit einem auf dem Datenträger gespeicherten Computerprogramm (14) für eine Steuereinrichtung (3) nach Anspruch 16, wobei das Computerprogramm (14) die Ausbildung der Steuereinrichtung (3) gemäß einem der Ansprüche 1 bis 15 bewirkt.

## Claims

1. Control device with a number of communication terminals (7), via which a number of external peripheral units (4-6) are able to be connected detachably to the control device,
- with the control device being embodied such that it implements a control process (9) during operation which iteratively executes a sequence (10) of control instructions which represent a control specification for an industrial technical process (2) running outside the control device,
- with the control process (9), during each iteration, accessing input data which is provided to the control process (9), determining output data on the basis of the input data and of internal data stored within the control process (9) and updating the internal data and making the output data available,
- with the control device able to be predetermined by means of configuration data which will be simulated to the peripheral units (4-6),
- with the control device in addition to the control process (9), implementing a model (20) of the industrial technical process (2) in relation to the simulated peripheral units (4-6), starting it as a separate process and executing it in addition to the control process,
- with, in relation to the simulated peripheral units (4-6), the input data being made available by the model (20) to the control process (9) and the control process (9) making the output data available to the model (20),
- with, in relation to the simulated peripheral units (4-6), the input data being made available to the control process (9) via the communication terminals (7) and the control process (9) making the output data available for output via the communication terminals (7).

2. Control device according to claim 1,
**characterised in that**
the input data is made available to the control process (9) by being written by the non-simulated peripheral units (4-6) or the model (20) into a data exchange memory area (18) and that the control process (9) makes the output data available to the non-simulated peripheral units (4-6) or the model (20) by writing the data into the data exchange memory area (18).

3. Control device according to claim 2,
**characterized in that,**
- the data exchange memory area (18) comprises a model area (24) and a peripheral area (25),
- that the control process (9) writes the output data made available to the model (20) into the model area (24) and reads the input data made available by the model (20) out of the model area (24) and
- that the control process (9) writes the input data made available to the non-simulated peripheral units (4-6) into the peripheral area (25) and reads the data made available by the non-simulated peripheral units (4-6) out of the peripheral area (25).

4. Control device according to claim 3,
**characterized in that**
the model area (24) is a self-contained memory area (24) dimensioned such that it is filled up by the input data made available by the model (20) and by the output data to be made available to the model (20).

5. Control device according to claim 3 or 4,
**characterized in that**
the peripheral area (25) is a self-contained memory area (25) dimensioned such that it is filled up by input data made available by non-simulated peripheral units (4-6) and by the output data to be made available to the non-simulated peripheral units (4-6).

6. Control device according to claim 3,
**characterized in that**
the model area (24) and the peripheral area (25) are each self-contained memory areas (24, 25) that are each dimensioned such that they are filled up by the overall output data made available by the control process (9) and overall input data made available to the control process (9).

7. Control device according to claim 6,
**characterised in that**
the model area (24) and the peripheral area (25) each comprise a number of consecutive memory cells (26, 27), so that the memory cells (26, 27) of the model area (24) and of the peripheral area (25) correspond to each other in pairs, and that one of each pair of corresponding memory cells (26, 27) is used and one remains unused.

8. Control device according to claim 2,
**characterised in that**
the data exchange memory area (18) is a self-contained memory area (18) that is dimensioned such that it is filled up by the output data made available by the control process (9) and by the input data to be made available to the control process (9).

9. Control device according to one of claims 2 to 8,
**characterised in that**
the data exchange memory area (18) is assigned an assignment device (28) that, depending on whether the respective peripheral unit (4-6) is simulated or not, accepts the input data from the model (20) or via one of the communication terminals (7) and feeds the output data to the model (20) or to one of the communication terminals (7).

10. Control device according to one of claims 2 to 9,
**characterised in that,**
the control process (9) accesses the data exchange memory area (18) via driver programs (22).

11. Control device according to claim 10 in conjunction with one of claims 3 to 7,
**characterised in that**
each of the driver programs (22) is assigned to one of the peripheral units (4-6) and that each of the driver programs (22), depending on whether the assigned peripheral unit (4-6) is simulated or not, exclusively accesses the model area (24) or the peripheral area (25).

12. Control device according to one of claims 1 to 11,
**characterised in that**
it is only possible to specify which of the peripheral units (4-6) will be simulated before the first iteration.

13. Control device according to one of claims 1 to 11,
**characterised in that**
it is possible to specify which of the peripheral units (4-6) will be simulated during the iterative execution of the sequence (10) of control instructions.

14. Control device according to one of the above claims,
**characterised in that**
the control device is embodied such that it operates the communication terminals (7) as bus terminals.

15. Control device according to one of the above claims,
**characterised in that**
the control device is embodied as a programmable logic controller or as a numerical controller.

16. Control device according to one of the above claims,
**characterised in that**
it features a system program memory (15) in which a computer program (14) for the control device is stored and that the control device is embodied as a result of the computer program (14) according to one of the above claims.

17. Data carrier with a computer program (14) stored on the data carrier for a control device (3) according to claim 16, with the computer program (14) bringing about the embodiment of the control device (3) according to one of claims 1 to 15.

## Revendications

1. Dispositif de commande comprenant un certain nombre de branchements de communication (7), par lesquels à chaque fois un certain nombre d'unités périphériques (4-6) externes peuvent être rattachées de façon amovible au dispositif de commande,
- le dispositif de commande étant conçu de telle sorte qu'il met en oeuvre pendant le fonctionnement un processus de commande (9), qui traite de façon itérative une séquence (10) de directives de commande qui représente une prescription de commande pour un processus (2) technique industriel se déroulant à l'extérieur du dispositif de commande,
- le processus de commande (9) recourant lors de chaque itération à des données d'entrée qui sont mises à la disposition du processus de commande (9), déterminant des données de sortie à l'aide des données d'entrée et de données internes stockées à l'intérieur du processus de commande (9), mettant à jour les données internes et mettant à disposition des données de sortie,
- le dispositif de commande pouvant être informé au moyen de données de configuration lesquelles des unités périphériques (4-6) sont simulées,
- le dispositif de commande mettant en oeuvre un modèle (20) du processus (2) technique industriel en supplément du processus de commande (9) par rapport aux unités périphériques (4-6) simulées, le démarrant comme processus propre et l'exécutant en supplément du processus de commande,
- les données d'entrée étant mises à la disposition du processus de commande (9) par le modèle (20) en ce qui concerne les unités périphériques (4-6) simulées et le processus de commande (9) mettant les données de sortie à la disposition du modèle (20),
- les données d'entrée étant mises à la disposition du processus de commande (9) par les branchements de communication (7) en ce qui concerne les unités périphériques (4-6) non simulées et le processus de commande (9) mettant à disposition les données de sortie pour la sortie par les branchements de communication (7).

2. Dispositif de commande selon la revendication 1,
**caractérisé en ce que**
les données d'entrée sont mises à la disposition du processus de commande (9) par le fait qu'elles sont inscrites par les unités périphériques (4-6) non simulées resp. le modèle (20) dans une zone de mémoire d'échange de données (18) et **en ce que** le processus de commande (9) met les données de sortie à la disposition des unités périphériques (4-6) non simulées resp. du modèle (20) par le fait qu'il inscrit les données de sortie dans la zone de mémoire d'échange de données (18).

3. Dispositif de commande selon la revendication 2,
**caractérisé en ce que**
- la zone de mémoire d'échange de données (18) présente une zone de modèle (24) et une zone périphérique (25),
- **en ce que** le processus de commande (9) inscrit les données de sortie mises à la disposition du modèle (20) dans la zone de modèle (24) et extrait de la zone de modèle (24) les données d'entrée mises à la disposition du modèle (20), et
- **en ce que** le processus de commande (9) inscrit les données de sortie mises à la disposition des unités périphériques (4-6) non simulées dans la zone périphérique (25) et extrait de la zone périphérique (25) les données d'entrée mises à disposition par les unités périphériques (4-6) non simulées.

4. Dispositif de commande selon la revendication 3,
**caractérisé en ce que**
la zone de modèle (24) est une zone de mémoire (24) cohérente en elle, qui est dimensionnée de telle sorte qu'elle est utilisée complètement par les données d'entrée mises à disposition par le modèle (20) et les données de sortie à mettre à la disposition du modèle (20).

5. Dispositif de commande selon la revendication 3 ou 4,
**caractérisé en ce que**
la zone périphérique (25) est une zone de mémoire (25) cohérente en elle, qui est dimensionnée de telle sorte qu'elle est utilisée complètement par les données d'entrée mises à disposition par les unités périphériques (4-6) non simulées et les données de sortie à mettre à la disposition des unités périphériques (4-6) non simulées.

6. Dispositif de commande selon la revendication 3,
**caractérisé en ce que**
la zone de modèle (24) et la zone périphérique (25) sont à chaque fois des zones de mémoire (24, 25) cohérentes en elles, qui sont dimensionnées à chaque fois de telle sorte qu'elles sont utilisées complètement par les données de sortie globalement mises à disposition par le processus de commande (9) et les données d'entrée à mettre globalement à la disposition du processus de commande (9).

7. Dispositif de commande selon la revendication 6,
**caractérisé en ce que**
la zone de modèle (24) et la zone périphérique (25) présentent à chaque fois un certain nombre de cellules de mémoire (26, 27) consécutives, de sorte que les cellules de mémoire (26, 27) de la zone de modèle (24) et de la zone périphérique (25) correspondent par paires les unes avec les autres et **en ce que**, pour chaque paire de cellules de mémoire (26, 27) correspondant les unes avec les autres, une est utilisée et une reste inutilisée.

8. Dispositif de commande selon la revendication 2,
**caractérisé en ce que**
la zone de mémoire d'échange de données (18) est une zone de mémoire (18) cohérente en elle, qui est dimensionnée de telle sorte qu'elle est utilisée complètement par les données de sortie mises à disposition par le processus de commande (9) et les données d'entrée à mettre à la disposition du processus de commande (9).

9. Dispositif de commande selon l'une quelconque des revendications 2 à 8,
**caractérisé en ce que**
à la zone de mémoire d'échange de données (18) est attribué un dispositif d'attribution (28), qui, selon que l'unité périphérique (4-6) respective est simulée ou non, reçoit les données d'entrée du modèle (20) ou par l'un des branchements de communication (7) et amène les données de sortie au modèle (20) resp. à l'un des branchements de communication (7).

10. Dispositif de commande selon l'une quelconque des revendications 2 à 9,
**caractérisé en ce que**
le processus de commande (9) recourt à la zone de mémoire d'échange de données (18) au moyen de programmes driver (22).

11. Dispositif de commande selon la revendication 10 en liaison avec l'une des revendications 3 à 7,
**caractérisé en ce que**
chacun des programmes driver (22) est attribué à l'une des unités périphériques (4-6) et **en ce que** chacun des programmes driver (22) recourt uniquement à la zone de modèle (24) ou à la zone périphérique (25) selon que l'unité périphérique (4-6) attribuée est simulée ou non.

12. Dispositif de commande selon l'une quelconque des revendications 1 à 11,
**caractérisé en ce que**
la spécification des unités périphériques (4-6) qui sont simulées n'est possible qu'avant la première itération.

13. Dispositif de commande selon l'une quelconque des revendications 1 à 11,
**caractérisé en ce que**
la spécification des unités périphériques (4-6) qui sont simulées peut être modifiée pendant le traitement itératif de la séquence (10) de directives de commande.

14. Dispositif de commande selon l'une quelconque des revendications précédentes,
**caractérisé en ce que**
le dispositif de commande est conçu de telle sorte qu'il exploite les branchements de communication (7) comme des branchements de bus.

15. Dispositif de commande selon l'une quelconque des revendications précédentes,
**caractérisé en ce que**
le dispositif de commande est conçu comme une commande programmable par mémoire ou comme commande numérique.

16. Dispositif de commande selon l'une quelconque des revendications précédentes,
**caractérisé en ce que**
il présente une mémoire de programmes du système (15) dans laquelle un programme informatique (14) est déposé pour le dispositif de commande et **en ce que** le dispositif de commande est conçu sur la base du programme informatique (14) selon l'une quelconque des revendications ci-dessus.

17. Support de données avec un programme informatique (14) stocké sur le support de données pour un dispositif de commande (3) selon la revendication 16, le programme informatique (14) entraînant la réalisation du dispositif de commande (3) selon l'une quelconque des revendications 1 à 15.
